# EUROPÄISCHE PATENTSCHRIFT

(11) **EP 0 399 289 B1**
(45) Veröffentlichungstag und Bekanntmachung des Hinweises auf die Patenterteilung: **04.01.1995**
(21) Anmeldenummer: 90108714.8
(22) Anmeldetag: 09.05.1990
(51) Int. Cl.: C09D 167/00

(54) **Wärmehärtbare Überzugsmasse und deren Verwendung bei der Beschichtung von Finish-Folien und Endloskanten**
Thermosetting coating compostions and their use for coating of finish-foils and endless borders
Compositions de revêtemment thermodurcissables et leur utilisation pour revêtir des pellicules de finition et des bords sans fin

(30) Priorität: 13.05.1989 DE 3915787
(43) Veröffentlichungstag der Anmeldung: 28.11.1990
(73) Patentinhaber: Herberts Gesellschaft mit beschränkter Haftung, 42285 Wuppertal (DE)
(72) Erfinder: Klostermann, Peter, Dr., D-4322 Sprockhövel 1 (DE); Rad, Hans-Dieter, Dr., D-7141 Schwieberdingen (DE); Schmaldt, Helmuth, D-7000 Stuttgart 50 (DE)
(74) Vertreter: Türk, Gille, Hrabal, Leifert

(56) Entgegenhaltungen:
- EP-A- 0 255 608
- DE-A- 2 746 178
- US-A- 4 314 925
- FARBE + LACK, Bd. 94, Nr. 6, Juni 1988, HANNOVER, DE, Seiten 425-429; KLOSTERMAN E.A.: "UMACETALISIERUNG ALS VERNETZUNGSPRINCIP ZUR LACKFILMBILDUNG"

## Beschreibung

Die Erfindung betrifft organische Lösemittel und übliche Lackadditive enthaltende wärmehärtbare Überzugsmassen, die besonders zur Beschichtung von Finish-Folien und Endloskanten geeignet sind.

Sowohl in der Möbel- als auch in der Plattenindustrie sind Oberflächenveredlungen mittels imprägnierter Papiere, die auf Span- oder Holzfaserhartplatten verpreßt werden und eine Grundierung darstellen (Grundierfolie) oder häufiger auch eine dekorative Wirkung haben (Finish- oder auch Dekorfolie), seit langer Zeit üblich. Die unzureichende Versorgung mit Echtholzfunieren und deren Preisniveau sowie das Verhalten der Kunden, preiswerte Möbel häufiger zu ersetzen als auch die Nachfrage nach besonderen optischen Oberflächeneffekten haben zu einem starken Einsatz dieser oben genannten Folien beigetragen. Um den Anforderungen an die Oberflächenoptik bzw. den Beständigkeiten nach DIN 68861 Gruppe A zu gegnügen, werden diese Folien nachbeschichtet.

Um den Gesamtproduktionsablauf zu vereinfachen werden die imprägnierten, gegebenenfalls bedruckten Papiere schon beim Folienhersteller direkt mit einer Beschichtung versehen und als sogenannte Fertigfolïen an die Möbel- bzw. Plattenindustrie geliefert.

Die Beschichtung der Finish-Folien sowie auch der Endloskanten erfolgt in speziellen Maschinen. Die Lackauftrags- und Dosiereinrichtung sind entweder Rasterwalzen oder Drahtrakel. Die Lackauftragsmenge liegt üblicherweise zwischen 5 und 60 g/m² , die Naßfilmschichtdicke zwischen 10 und 80 µm. Zur Lacktrocknung werden sowohl Trockenkanäle, in denen mit Luft beheizt wird (Konvektoren), als auch IR-Strahler eingesetzt.Nach Aushärtung der Beschichtung wird die Fertigfolie als Rolle konfektioniert und in dieser Form an den Kunden in der Möbel- oder Plattenindustrie ausgeliefert.

Diese als Rollenware gelieferte Fertigfolie wird unter Druck und Wärme mit dem Untergrund (Span- bzw. Hartfaserplatten) verklebt. Die so erhaltenen Flächen bedürfen keiner weiteren Endbehandlung mehr.

So ist es wichtig, daß die fertiglackierten aber noch nicht verpreßten Folien weitgehend formstabil sind, d.h. sie dürfen sich weder einrollen noch krümmen, Vorgänge die in Fachkreisen häufig mit dem Terminus "Schüsseln" bezeichnet werden.

Zum Aufpressen der Finish-Folien und Endloskanten zur Herstellung von Platten oder Möbeln werden im allgemeinen Temperaturen in der Größenordnung von 150 bis 180°C und erhöhter Druck während 5 bis 30 Sekunden angewendet. Die fertiggestellten Finish-Folien und Endloskanten dürfen dann keine Blockneigung aufweisen und sich nicht verfärben. Sowohl beim Preßvorgang, als auch bereits bei der Herstellung der Finish-Folien und der Endloskanten soll die Bildung von Formaldehyd und dessen Emission möglichst vermieden werden oder zumindest stark herabgesetzt werden.

Aus dieser Verfahrensweise ergeben sich besondere Ansprüche sowohl an die Finish-Folien als auch an die Endloskanten, da nicht nur die Eigenschaften der Endbeschichtung,sondern auch die Beständigkeit gegen die beim Verpreßvorgang auftretenden mechanischen Belastungen und Temperatureinwirkungen gesichert werden müssen.

Die erhaltenen Oberflächen sollen auch nach dem Aufpressen auf Platten oder Möbelteile eine hohe Kratzfestigkeit aufweisen und beständig gegen Beanspruchungen im Haushalt sein. Die Beständigkeit wird, wie erwähnt, durch die DIN-Norm 68861, Gruppe A, geregelt. Gemäß dieser Norm erfolgt eine Prüfung mit im Haushalt anfallenden Mitteln, wie Säuren, nämlich Essigsäure, Zitronensäure, Alkalien, wie Natriumcarbonat, Ammoniakwasser, Alkohole, wie Ethanol, verschiedene Getränke, schwarzer Tee, Lösemittel, wie Benzin. Aceton, Fette, wie Butter, Olivenöl, Salze, Senf, Desinfektionsmittel, Kugelschreiberpasten, Stempelfarbe und Reinigungsmittel. Gemäß DIN 688861, Gruppe A müssen die Oberflächen einer Einwirkung derartiger Mittel während 16 Stunden ohne sichtbare Veränderungen entsprechen.

Bisher wurde versucht für Oberflächen, die eine gute Beständigkeit aufweisen sollen und zudem kratzfest sein müssen, Lacke zu verwenden, die Alkydharze in Kombination mit entweder Melamin-und/oder Harnstoffharz als Hauptbindemittel enthalten.

Die vorgenannten Lacke, formuliert mit wesentlichen Anteilen Harnstoff und/oder Melaminharzen, zeigen jedoch bei der Chemikalienbelastung, insbesondere bei Einwirkung von Wasser und wäßrigen Lösungen, erhebliche Nachteile dadurch, daß die Oberfläche angegriffen wird und somit ihren Anforderungen an Oberflächenoptik und Beständigkeit nicht mehr der zitierten DIN genügt. Auch tritt bereits während der Verarbeitung der Materialien durch Reaktion der Bindemittelkomponenten bei der Lackfilmhärtung eine Formaldehydemission auf. Diese ist jedoch nach der Verarbeitung nicht abgeschlossen, sondern kann noch lange nachwirken. Hierbei zeigt sich, daß trotz der relativ geringen Lackmenge, bezogen auf den Anteil der fertiggestellten verpreßten Spanplatte, erhebliche Formaldehydmengen aus dem Lack austreten.

Die mit den bekannten Formulierungen hergestellten Folien zeigen nach thermischer Aushärtung des Lackes ein starkes Schüsseln und weisen somit Probleme bei der Konfektionierung der Folie einerseits und der Verpressung der Folie andererseits auf. Die so fertiggestellten Oberflächen lassen sich mit dem bestehenden System nicht wieder überlackieren, so daß Ausbesserungen unmöglich sind.

In der DE-A-36 10 732 werden wäßrige Lacke für die Beschichtung von Finish-Folien und Endloskanten beschrieben. Diese wäßrigen Systeme basieren auf Polyacrylatharzen mit selbstvernetzenden Säureamidderivatgruppen in Kombination mit Melaminharzen oder Melamin/Harnstoffharzgemischen und geblockten Säuren als potentiellen Härtungskatalysatoren. Derartige wäßrige Lacke sind jedoch in der Untergrundbenetzung der Substrate problematisch und neigen zudem bei der Verarbeitung zur Schaumbildung.

In der EP-A-0 255 608, der EP-A-0 140 357 und in "Farbe und Lack", Bd. 94, Nr. 6, 1988, Seiten 425-429 werden zur Härtung von hydroxylgruppenhaltigen Harzen, insbesondere Polyesterharzen, als Härter acetalfunktionelle Präkondensate beschrieben, die die bisher verwendeten Aminoplastzharz-Vernetzer ersetzen sollen.

Aufgabe der Erfindung ist die Bereitstellung von wärmehärtbaren Aminoplastharze als Vernetzer enthaltenden Überzugsmassen, die zur Beschichtung von Finish-Folien und Endloskanten geeignet sind, eine gute Untergrundbenetzung ergeben, bei der Verarbeitung nicht zur Schaumbildung neigen, nach der Applikation kein Schüsseln der Folien verursachen, bei und nach der Aushärtung nur geringe Mengen an Formaldehyd abspalten und zu mechanisch und chemisch beständigen Beschichtungen ohne Blockneigung führen und die bei einer Hitze-Preßbehandlung keine schädliche Veränderungen erleiden.

Diese Aufgabe wird erfindungsgemäß gelöst durch eine wärmehärtbare Überzugsmasse auf der Basis organischer Lösemittel und üblicher Lackadditive, die als Bindemittel ein Gemisch enthält aus:
A) 40 bis 85 Gew.-Teilen eines acetal- und hydroxylfunktionellen Präkondensat aus einem hydroxyfunktionellen Harz mit einer Hydroxyfunktionalität von mindestens 3 OH-Gruppen pro Molekül und einer zahlenmittleren Molmasse von 300 bis 10000 und einem Acetal mit 2 bis 10 Acetalalkoxyendgruppen und einer zahlenmittleren Molmasse von 90 bis 1000,
   wobei das Präkondensat eine Viskosität von 200 bis 50000 mPa.s, gemessen in 60% Lösung in Methoxypropylacetat bei 25°C, aufweist,
B) 3 bis 20 Gew.-Teilen eines Aminoplastharzes und
C) 0 bis 40 Gew.-Teilen eines Polyesterharzes mit einer zahlenmittleren Molmasse von 500 bis 5000.
Die angegebenen Gewichtsteile beziehen sich auf den Festkörperanteil der eingesetzten Bindemittelkomponenten.

Als Komponente A) enthalten die erfindungsgemäßen wärmehärtbaren Überzugsmassen acetal- und hydroxylfunktionelle Präkondensate. Die acetal- und hydroxylfunktionellen Präkondensate werden in Mengen von 40 bis 85 Gew.-%, bevorzugt von 50 bis 70 Gew.-%, eingesetzt (bezogen auf 100 Gew.-% Gesamtbindemittel als Festharz). Geeignet sind acetal- und hydroxylfunktionelle Präkondensate, beispielsweise hergestellt durch partielle Umsetzung hydroxylfunktioneller Basisharze mit Acetalen.

Beispiele für derartige Präkondensate werden in der DE-A-33 39 424 beschrieben.

Als Basisharze kommen solche hydroxylgruppenhaltige Verbindungen mit einer Hydroxylfunktionalität von mindestens 3 und einer zahlenmittleren Molmasse von 300 bis 10000 in Frage.

Beispiele für solche hydroxylgruppenhaltige Verbindungen sind Polyacrylatharze und Polykondensationsharze wie Polyester bzw. Alkydhare und Polyadditionsharze wie Polyurethanharze.

Beispiele für Polyacrylatharze mit einer zahlenmittleren Molmasse bis zu etwa 10000 sind in der Patentliteratur wie DE-A-15 95 243, DE-A-20 54 231, DE-A-20 21 178, DE-A-26 03 259 beschrieben. Es handelt sich hierbei z.B. um Polymerisate von Acrylmonomeren wie (Meth-)Acrylsäure, Methyl(meth)acrylat, Hydroxyethyl(meth)acrylat, Styrol, Vinylverbindungen, wie sie auch in Wagner/Sarx, Lackkunstharze, 5.Auflage, Viertes Kapitel, Seite 229-238 beschrieben sind.

Als Polykondensationsharze kommen z.B. Polyester-bzw. Alkydharze in Betracht. Polyesterharze sind Umsetzungsprodukte von aliphatischen, cycloaliphatischen und/oder aromatischen Mono- und/oder Polycarbonsäuren mit aliphatischen und/oder cycloaliphatischen Mono- und/oder Polyolen. Besonders bevorzugt sind Polyester bzw. Alkydharze mit einer zahlenmittleren Molmasse von 300 bis 5000, welche als Carbonsäurekomponente Verbindungen wie Adipinsäure, Benzoesäure, p-tert.-Butylbenzoesäure, Maleinsäure, Fumarsäure, o-, m-, p-Phthalsäure, Sebacinsäure, Tetrahydro-, Hexahydro-Phthalsäure, Trimellithsäure sowie aliphatische gesättigte und/oder ungesättigte Monocarbonsäuren mit einer Kohlenstoffzahl von 6 bis 20 und als Alkoholkomponente Verbindungen wie Ethylenglykol, Propylenglykol, Glyzerin, Pentaerythrit, Neopentylglykol, Trimethylolethan, Trimethylolpropan, Hexandiol,Hydroxypivalinsäureneopentylglykolester, Diethylenglykol, Dipropylenglykol enthalten. Solche Polyester bzw. Alkydharze sind z.B. beschrieben in Houben-Weyl, Makromolekulare Stoffe II, Band 14/2, Seite 4-42 und in Ullmann, "Encyclopädie der technischen Chemie", 4.Auflage, Band 19, Seite 61-86.

Als Polyadditionsharze, zweckmäßig mit einer zahlenmittleren Molmasse von 300 bis 5000, werden solche verwendet, welche aus hydroxylgruppenhaltigen Polyestern und/oder Polyolen mit di- und/oder trifunktionellen Isocyanatharzen durch eine Polyadditionsreaktion hergestellt werden, wobei als H-aktive Substanz auch geringe Mengen von primären oder sekundären Aminen verwendet werden können und die entstehenden Reaktionsprodukte wiederum Hydroxylgruppen tragen. Besonders bevorzugt werden solche Polyadditionsharze verwendet, welche eine Hydroxylzahl von 50 bis 500 aufweisen.

Diese Basisharze werden mit Acetalen partiell umgesetzt. Die Acetale sind Umsetzungsprodukte aus Aldehyden mit einem Molekulargewicht von höchstens 500 mit Mono- und gegebenenfalls Polyalkoholen und im Mittel 2 bis 10 Acetalalkoxyendgruppen und einem mittleren Molekulargewicht von 90 bis 1000. Die Umsetzung erfolgt beispielsweise in organischen Lösungsmitteln bei Temperaturen von 100 bis 200°C in Gegenwart von Katalysatoren wie Lewis-Säuren und Protonen-Säuren , die üblicherweise für die Umacetalisierungsreaktionen eingesetzt werden.

Beispiele für die Acetalkomponente sind:
Acetale der Formeln 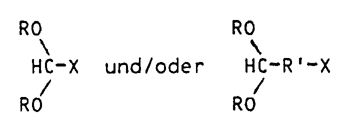
- R: Alkyl C₁ - C₄ (unverzweigt,verzweigt)
- R': Alkylen C₁-C₁₅ (unverzweigt,verzweigt),Phenylen,Diphenylenether
- X: Alkyl C₁-C₄ (unverzweigt,verzweigt), RO-CH₂-,(RO)₂CH-, worin R wie vorstehend definier ist.
Z.B.1,1,2,2-Tetramethoxyethan
1,1,2,2-Tetraethoxyethan
1,1,3,3-Tetramethoxypropan
1,1,3,3-Tetraethoxypropan
1,1,2-Trimethoxyethan
2-Ethyl-1,1-dimethoxyhexan
1,1-Dimethoxy-3,5,5-trimethylhexan
4,4'-Bis(dimethoxymethyl)diphenylether.
Für die Präkondensation hat sich der äquivalente Einsatz der beiden mehrfunktionellen Komponenten und partielle Kondensation unter Säurekatalyse bis zu einer geeigneten Viskositätsstufe als vorteilhaft gezeigt.

Eine geeignete Viskosität ist 200 bis 50000 mPa.s,gemessen in 60% Lösung in Methoxypropylacetat bei 25°C.

Geeignete Säurekatalysatoren sind übliche saure Katalysatoren, beispielsweise auf der Basis von Sulfonsäuren, wie p-Toluolsulfonsäure, Dodecylbenzolsulfonsäure und Dinonylnaphthalindisulfonsäure,Phosphorsäure, Phosphonsäuren, Schwefelsäure oder Salzsäure.

Zur partiellen Umsetzung werden die hydroxyfunktionelle Komponente und die Acetalkomponente im Verhältnis der Anzahl der OH-Gruppen zur Anzahl der Acetalalkoxygruppen von 3:1 bis 0,7:1, bevorzugt 1:1 eingesetzt. Man führt die Umsetzung bis zum Erreichen der gewünschten Viskosität unter Erwärmen durch. Im allgemeinen wird auf eine Temperatur über der Siedetemperatur des abzuspaltenden Alkohols erwärmt. Die Reaktion kann durch Kühlung der Präkondensatlösung bei Erreichen des gewünschten Viskositätswertes gestoppt werden. Man erhält lagerstabile Lösungen nach Neutralisation des Säure-Katalysators mit beispielsweise einem Amin, wie einem tertiären Amin. Als Lösungsmittel für diese Umsetzung kommen unter den Reaktionsbedingungen weitgehend verseifungsstabile Lösungsmittel mit deutlich höherem Siedepunkt als der abzuspaltende Alkohol in Frage, z.B.:
Ether und Etherester, wie Methoxypropylacetat. Das Verfahren wird im nachfolgenden Beispiel näher erläutert:
Als hydroxylfunktionelles Basisharz wird ein Polyester der berechneten Molmasse M̅n = 1200 g mol⁻¹ und einer Hydroxylfunktionalität von 6 eingesetzt. Die Acetalisierung erfolgt mit einer Mischung der Acetale 1,1,3,3-Tetramethoxypropan und 1,1,2-Trimethoxyethan (molares Verhältnis 3:1) katalysiert durch p-Toluolsulfonsäure (0,1 Mol-% p-Tss bezogen auf Acetal). Das Äquivalenzverhältnis von Hydroxyl- und Acetalmethoxygruppen beträgt 1:1. Das Polyesterharz, in Methoxypropylacetat gelöst, wird mit der p-Tss vorgelegt und die Acetalmischung unter Rühren zugefügt. Bei einer Reaktionstemperatur von 100-110°C beginnt die Kondensation. Zur Prozeßkontrolle wird die Menge an kondensiertem Methanol gemessen und die Viskosität der Reaktionsmischung in kurzen Zeitabständen wieder bestimmt. Im genannten Beispiel wird die gewünschte Präkondensatviskosität von 1400 mPa.s (gemessen 60%ig in Methoxypropylacetat bei 25°C) nach Abspaltung von 13,6% der maximal möglichen Methanolmenge erreicht. Die Reaktion kann durch Kühlung der Präkondensat-Lösung bei Erreichen dieses Viskositätswertes gestoppt werden. Nach Neutralisation des Säurekatalysators mit einem tertiären Amin resultieren lagerstabile Harzlösungen.

Als Komponente B) enthalten die erfindungsgemäßen wärmehärtbaren Überzugsmassen 3 bis 20 Gew.-%(bezogen auf 100 Gew.-% Gesamtbindemittel als Festharz) eines Aminoplastharzes. Als Aminoplastharze können Kondensationsprodukte in Betracht gezogen werden, wie sie nach bekannten Verfahren durch Umsetzung von Formaldehyd mit Harnstoff, Benzoguanamin oder Melamin erhältlich sind. Sie sind üblicherweise noch mit 1 bis 6 Kohlenstoffatome aufweisenden Alkanolen ganz oder teilweise verethert. Es handelt sich dabei um auf dem Lacksektor übliche Vernetzer.

Bevorzugt sind Kondensationsprodukte von Formaldehyd und Melamin, verethert ganz oder teilweise mit Methanol. Als besonders geeignet haben sich Hexamethoxymethylmelaminharze erwiesen, wie z.B. das Handelsprodukt CYMEL 303 (CYMEL ist ein eingetragenes Warenzeichen).

Solche Kondensate sind beispielsweise beschrieben in Ullmann, "Encyclopedia of Industrial Chemistry", 5. Auflage, Vol.A 2, Kapitel "Aminoresins" S. 115-141 (1985) und Houben-Weyl, "Methoden oder Organischen Chemie", Bd. 14/2, Seite 319-388 (1963).

Die erfindungsgemäßen wärmehärtbaren Überzugsmassen enthalten Lösemittel und übliche Lackadditive.

Als organische Lösemittel für die Bindemittel werden übliche Lacklösemittel, Alkohole wie Isopropanol, n-Butanol, aromatische Kohlenwasserstoffe wie Xylol, Trimethylbenzol, Solvesso 100 (Gemisch aromatischer Kohlenwasserstoffe (eingetragenes Warenzeichen) ), Etherester wie Methoxypropylacetat, Ether wie Ethylenglykoldimethylether oder andere organische Lösemittel eingesetzt,welche die Bindemittel zu lösen vermögen, wobei auch Lösemittelgemische verwendet werden können.

Als Lackadditive enthalten die erfindungsgemäßen Überzugsmassen für die Härtung mit Aminoplastharzen übliche saure Katalysatoren, wie solche auf der Basis von Schwefelsäure, Sulfonsäuren (wie p-Toluolsulfonsäure, Dodecylbenzolsulfonsäure, Dinonylnaphthalindisulfonsäure), Phosphorsäure, Phosphonsäuren, oder Chlorwasserstoffsäure, sowie geblockte Säuren (Addukte, z.B. Salze, die bei der Lackhärtungstemperatur freie Säuren abspalten) und Lewis-Säuren. Die sauren Katalysatoren werden kurz vor der Verabreichung zugesetzt. Die Säuren werden in üblichen katalytischen Mengen zugesetzt , die beispielsweise bei 0,1 bis 5 Gew.-%, bezogen auf die gesamte Überzugsmasse liegen.

Außerdem kann die Beschichtungsmasse weitere übliche Additive enthalten, z.B. Siliconöle, niedermolekulare Acrylatpolymere (Verlaufsmittel), oxidierte Polyethylenwachse, Polysiloxan-Entschäumer, gegebenenfalls Benetzungsmittel, Mattierungsmittel (Kieselsäurederivate, Wachse).

Die wärmehärtbare Überzugsmasse gemäß der Erfindung enthält bevorzugt auf 100 Gew.-Teile Bindemittel etwa 40 bis 100 Gew.-Teile Lösemittel und Additive. Die Lösemittelmenge hängt weitgehend von den Applikationsbedingungen ab. Bevorzugt sind lösemittelarme Systeme.

Weiter kann die in den Patentansprüchen definierte wärmehärtende Beschichtungsmasse bis 40 Gew.-% eines Polyesterharzes enthalten. Polyesterharze bzw. Alkydharze sind Umsetzungsprodukte von aliphatischen, cycloaliphatischen und/oder aromatischen Mono- und/oder Polycarbonsäuren mit aliphatischen und/oder cycloaliphatischen Mono- und/oder Polyolen. Besonders bevorzugt sind Polyester bzw. Alkydharze mit einer zahlenmittleren Molmasse von 500 bis 5000, welche als Carbonsäurekomponente Verbindungen wie Adipinsäure, Benzoesäure, p-tert.-Butylbenzoesäure, Maleinsäure, Fumarsäure, o-, m-, p-Phthalsäure, Sebacinsäure,Tetrahydro-, Hexahydro-Phthalsäure, Trimellithsäure sowie aliphatische gesättigte und/oder ungesättigte Monocarbonsäuren mit einer Kohlenstoffzahl von 6 bis 20 und als Alkoholkomponente Verbindungen wie Ethylenglykol,Diethylenglykol, Propylenglykol, Glyzerin, Pentaerythrit, Neopentylglykol, Trimethylolpropan, Butandiol, Pentandiol, Hexandiol, Hydroxypivalinsäureneopentylglykolester, Dipropylenglykol enthalten. Solche Polyester bzw. Alkydharze sind z.B. beschrieben in Houben-Weyl "Methoden der Organischen Chemie", Makromolekulare Stoffe II, Band 14/2, Seite 4-42 und in Ullmann, "Encyklopädie der technischen Chemie", 4. Auflage, Band 19, Seite 61-86.

Die erfindungsgemäßen Überzugsmittel können im Einschichtverfahren z.B. durch Aufrakeln, Aufgießen oder Walzenauftrag auf verschiedene Substrate aufgebracht und durch Wärmebehandlung bis zu beispielsweise 200°C, bevorzugt bei 140 bis 160°C ausgehärtet werden.

Sie sind besonders geeignet für die Verwendung zur Lackierung von Finish-Folien und Endloskanten. Diese können z.B. aus harzimprägnierten Papieren bestehen.

Die erfindungsgemäßen Überzugsmittel weisen den Vorteil auf, daß sie nur geringe Mengen Formaldehyd bei der Aushärtung abspalten, eine geringe Vergilbung sowohl bei der Aushärtung als auch gegenüber Umwelteinflüssen ergeben und zu Überzügen mit guter mechanischer und chemischer Beständigkeit, insbesondere hoher Wasserbeständigkeit, führen , und damit lackierte Folien ein geringes Schüssein aufweisen.

Sie sind bereits nach einer Wärmebehandlung bei 140 bis 160°C so weit ausgehärtet, daß sie die bei der Herstellung der Platten bzw. Möbelteile angewandten Preßbedingungen ohne Blockeigenschaften und Verfärbungen zu zeigen, unbeschadet überstehen. Die so erhaltenen Oberflächen haben eine hohe Kratzfestigkeit und erreichen die in der DIN Norm 68861 Gruppe A geforderten Beständigkeiten. Sie emittieren sowohl während der Beschichtung der Folien bzw. Endloskanten als auch bei der Weiterverarbeitung der beschichteten Folien bzw. Endloskanten wenig Formaldehyd.

### Herstellungsbeispiel für die Bindemittelkomponente A)

### 1) Herstellung eines Polyesters als hydroxylgruppenhaltiges Basisharz

590 g Trimethylolpropan wurden mit 340 g Phthalsäureanhydrid, 169 g Adipinsäure und 111g Isononansäure in einem Vierhalskolben mit Kolonne, Abscheider, Kühler, Rührer und Inertgaszuleitung vermischt. Etwas Xylol wurde als Schleppmittel zugegeben und zunächst auf 150°C aufgeheizt. Anschließend wurde so lange die Reaktionstemperatur erhöht (bis max.210°C) und Wasser azeotrop aus dem Reaktionsgemisch entfernt, bis die Säurezahl (SZ) des entstehenden Harzes unter 2 mg KOH/g gefallen war. Das entstandene Harz wurde abgekühlt und mit Methoxypropylacetat auf 60% verdünnt.

### 2) Acetalisierung des unter 1) beschriebenen hydroxylfunktionellen Basisharzes

1000 g der Basisharz-Lösung nach 1) werden mit 0,17 g p-Toluolsulfonsäure versetzt und in einem Vierhalskolben, der mit Kolonne, Rührer, Inertgaszuleitung und Abscheider versehen ist, 30 min. auf 60°C erwärmt. Danach werden 139,3 g 1,1,3,3-Tetramethoxypropan und 33,7 g 1,1,2-Trimethoxyethan zugegeben und langsam auf 100°C erwärmt. Bei dieser Temperatur wird unter Beachtung der Destillationstemperatur Methanol abgespalten und destillativ abgetrennt. Nach Erreichen der Sollviskosität von 1400 mPa.s wird rasch gekühlt und durch Zugabe von 0,22 g Triethylamin neutralisiert. Die erhaltene klare Harzlösung weist einen Gehalt an nichtflüchtigen Anteilen von ca. 65 Gew.-% auf.

### Beispiel für eine erfindungsgemäße Überzugsmasse

70 Teile des acetal- und hydroxylfunktionellen Präkondensats nach Herstellungsbeispiel Bindemittelkomponente A) (Einbrennrückstand (1h,120°C: 65 Gew.-%) werden mit 10 Teilen CYMEL 303 ^{R} (Hexamethoxymethylmelaminharz, mit einem Einbrennrückstand (1h,120°C von 95 Gew.-%) gemischt. Zu dieser Mischung werden 2 Gew.-% einer ein oxidiertes Polyethylenwachs enthaltenden Emulsion, 5 Gew.-% feindisperses Siliciumdioxid als Mattierungsmittel und 1 Gew.-% eines Polysiloxan enthaltenden Entschäumers unter ständigem Rühren zugegeben. Als Lösemittel werden 5 Gew.-% n-Butanol und 7 Gew.-% Xylol zugesetzt. Nach Zugabe von 4 Gew.-% einer Katalyatorlösung bestehend aus 20 Teilen p-Toluolsulfonsäure-Monohydrat und 80 Teilen n-Butanol, und Einstellung auf Verarbeitungsviskosität werden von der gehärtenden Beschichtung * folgende Beständigkeiten nach DIN 68861 Gruppe A erreicht:
* Härtungsbedingungen: Nach Applikation mit Naßfilmstärken von 20 bis 50 µm erfolgt die Härtung bei Temperaturen von 140 bis 160°C innerhalb von 30 bis 60 sec. Die Aushärtung ist so vollständig, daß die Beschichtung die weiteren Verfahrensschritte -inbesondere die steigendem Maße angewandten verschärften Preßbedingungen- ohne Blockeigenschaften oder Verfärbungen zu zeigen, schadlos überstehen.

| Prüfmittel | A Ewd | Erg |
|---|---|---|
| 1. Wasser | 16h | 0 |
| 2. Ammoniakwasser | 16h | 0 |
| 3. Ethanol | 16h | 0 |
| 4. Senf | 16h | 0-1 |
| 5. Aceton | 16h | 1 |
| Ewd= Einwirkungsdauer des Prüfmittels Erg= Ergebnis Aus der vergleichenden Betrachtung der geprüften und ungeprüften Fläche ist das Ergebnis nach folgender Bewertungsskala (in Anlehnung an DIN 53230) anzugeben: 0 Keine sichtbaren Veränderungen 1 Eben erkennbare Änderungen in Glanz oder Farbe 2 Leichte Veränderungen in Glanz oder Farbe:Die Struktur der Prüffläche ist nicht verändert 3 Starke Markierungen sichtbar: Die Struktur der Prüffläche ist jedoch weitgehend unbeschädigt 4 Starke Markierungen sichtbar: Die Struktur der Prüffläche ist verändert 5 Prüffläche stark verändert bzw. zerstört. | | |

Die ausgehärtete Beschichtung, erhalten aus der erfindungsgemäßen Überzugsmasse wurde im Vergleich mit einem üblichen, dem Stand der Technik entsprechenden SH-Lack einer Formaldehyd-Emission-Prüfung unterzogen.

Die Formaldehydbestimmung erfolgte nach der Gasanalyse in Anlehnung an DIN 52368. Die Werte beziehen sich auf mg Formaldehyd/h/m² Trägermaterial. Ergebnisse bei verschiedenen Naßfilmstärken:

| Naßfilmstärke | Erfindungsgemäße Überzugsmasse | |
|---|---|---|
| | Zeitraum | Formaldehyd-Emission |
| 36µm | 2 - 4 Std. | 0,24 mg |
| 50µm | 2 - 4 Std. | 0,34 mg |

Gegenwärtig eingesetzte wärmehärtbare Lacke ergeben bei einer Naßfilmstärke von 36µm während 2-4 Std. eine Formaldehydemission von 0,85 mg.

## Patentansprüche

1. Wärmehärtbare Überzugsmasse enthaltend organische Lösemittel, übliche Lackadditive und als Bindemittel ein Gemisch aus:
A) 40 bis 85 Gew.-Teilen eines acetal- und hydroxylfunktionellen Präkondensats aus einen hydroxyfunktionellen Harz mit einer Hydroxyfunktionalität von mindestens 3 OH-Gruppen pro Molekül und einer zahlenmittleren Molmasse von 300 bis 10000 und einem Acetal mit 2 bis 10 Acetalalkoxyendgruppen und einer zahlenmittleren Molmasse von 90 bis 1000, wobei das Präkondensat eine Viskosität von 200 bis 50000 mPa.s, gemessen in 60% Lösung in Methoxypropylacetat bei 25°C, aufweist,
B) 3 bis 20 Gew.-Teilen eines Aminoplastharzes und
C) 0 bis 40 Gew.-Teilen eines Polyesterharzes mit einer zahlenmittleren Molmasse von 500 bis 5000,
wobei sich die angegebenen Gewichtsteile auf den Festharzanteil der eingesetzten Bindemittelkomponenten beziehen.

2. Überzugsmasse nach Anspruch 1, dadurch gekennzeichnet, daß das acetal- und hydroxylfunktionelle Präkondensat durch partielle Umsetzung des filmbildenden hydroxyfunktionellen Harzes mit Acetalen der allgemeinen Formel 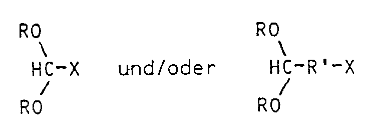 worin
R unverzweigtes oder verzweigtes Alkyl mit C₁ -C₄ ist,
R' unverzweigtes oder verzweigtes Alkylen mit C₁-C₁₅, Phenylen oder Diphenylenether ist, und
X unverzweigtes oder verzweigtes Alkyl mit C₁ -C₄, -CH₂-OR oder -CH(OR)₂, worin R die vorstehende Bedeutung hat, ist
erhalten wurde.

3. Überzugsmasse nach Anspruch 1 oder 2, dadurch gekennzeichnet, daß das Aminoplastharz ein ganz oder teilweise verethertes Melamin-Formaldehyd-Kondensationsharz ist.

4. Überzugsmasse nach Anspruch 3, dadurch gekennzeichnet, daß das Aminoplastharz ein ganz oder teilweise mit Methanol verethertes Melamin-Formaldehyd-Kondensationsharz ist.

5. Verfahren zur Beschichtung von Finish-Folien und Endloskanten, bei dem die Finish-Folien und Endloskanten mit einer wärmehärtbaren Überzugsmasse gemäß einem der Ansprüche 1 bis 4 beschichtet und der erhaltene Naßfilm anschließend bei 120 bis 200°C ausgehärtet wird.

6. Verfahren nach Anspruch 5, dadurch gekennzeichnet, daß der Naßfilm bei 140 bis 160°C ausgehärtet wird.

7. Verwendung der wärmehärtbaren Überzugsmassen gemäß einem der Ansprüche 1 bis 4 zum Beschichten von Finish-Folien und Endloskanten.

## Claims

1. Thermosetting coating compound containing organic solvents, customary lacquer additives and as binder a mixture of:
(A) 40 to 85 parts by weight of an acetal- and hydroxyl-functional precondensate from a hydroxyfunctional resin with a hydroxy functionality of at least 3 OH groups per molecule and a number-average molecular weight of 300 to 10,000 and an acetal with 2 to 10 acetalalkoxy end groups and a number-average molecular weight of 90 to 1000, wherein the precondensate has a viscosity of 200 to 50,000 mPa·s, measured in 60 % solution in methoxypropyl acetate at 25 °C,
B) 3 to 20 parts by weight of an aminoplastic resin and
C) 0 to 40 parts by weight of a polyester resin with a number-average molecular weight of 500 to 5000,
wherein the quoted parts by weight relate to the solid resin portion of the binder components used.

2. Coating compound according to Claim 1, characterized in that the acetal- and hydroxyl-functional precondensate was obtained by partial reaction of the film-forming hydroxy-functional resin with acetals of the general formula 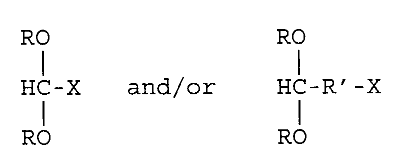 wherein
R is unbranched or branched C₁-C₄ alkyl,
R' is unbranched or branched C₁-C₁₅ alkylene, phenylene or diphenylene ether, and
X is unbranched or branched C₁-C₄ alkyl, -CH₂-OR or -CH(OR)₂, wherein R has the
above meaning.

3. Coating compound according to Claim 1 or 2, characterized in that the aminoplastic resin is a fully or partially etherified melamine-formaldehyde condensation resin.

4. Coating compound according to Claim 3, characterized in that the aminoplastic resin is a melamine-formaldehyde condensation resin fully or partially etherified with methanol.

5. Process for coating of finish films and continuous selvedges, in which the finish films and continuous selvedges are coated with a thermosetting coating compound according to one of Claims 1 to 4, and the wet film obtained is subsequently cured at 120 to 200 °C.

6. Process according to Claim 5, characterized in that the wet film is cured at 140 to 160 °C.

7. Use of the thermosetting coating compounds according to one of Claims 1 to 4 for the coating of finish films and continuous selvedges.

## Revendications

1. Revêtement thermodurcissable contenant des solvants organiques, des additifs de vernis habituels et comme liant un mélange de :
A) 40 à 85 parties en poids d'un précondensat à fonctions acétale et hydroxyle, fait d'une résine à fonction hydroxy avec une fonctionnalité hydroxy d'au moins 3 groupes OH par molécule et avec une masse moléculaire moyenne en nombre de 300 à 10 000 et une fonction acétale avec de 2 à 10 groupes finals acétalalcoxy et une masse molaire moyenne en nombre de 90 à 1000,
où le précondensat présente une viscosité de 200 à 50 000 mPa.s, mesurée dans une solution à 60% dans l'acétate de méthoxypropyle à 25°C,
B) de 3 à 20 parties en poids d'une résine aminoplaste et
C) de 0 à 40 parties en poids d'une résine polyester ayant une masse molaire moyenne en nombre de 500 à 5000,
où les parties en poids indiquées se rapportent à la fraction résine solide des composants liants utilisés.

2. Revêtement selon la revendication 1, caractérisé en ce que le précondensat à fonction acétale et hydroxyle est obtenu par réaction partielle de la résine à fonction hydroxy filmogène avec des acétals de formule générale 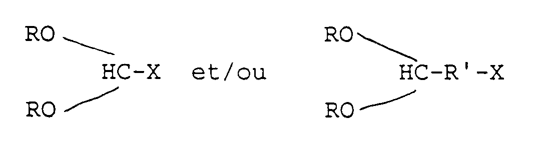 R représente un alkyle en C₁ à C₄ (non ramifié, ramifié)
R' représente un alcylène en C₁ à C₁₅ (non ramifié, ramifié), un phénylène ou un diphénylèneéther, et
X représente un alkyle en C₁ à C₄ (non ramifié, ramifié),
-CH₂OR^{,} ou -CH(OR)₂CH-, où R est tel que défini cidessus.

3. Revêtement selon la revendication 1 ou 2, caractérisé en ce que la résine aminoplaste est une résine de condensation mélamine-formaldéhyde entièrement ou partiellement éthérifiée.

4. Revêtement selon la revendication 3, caractérisé en ce que la résine aminoplaste est une résine de condensation mélamine-formaldéhyde entièrement ou partiellement éthérifiée avec du méthanol.

5. Procédé de recouvrement de feuilles de finissage et de bords sans fin, dans lequel on revêt les feuilles de finissage et les bords sans fin avec un revêtement thermodurcissable selon l'une des revendications 1 à 4, puis on durcit le film humide obtenu entre 120 et 200°C.

6. Procédé selon la revendication 5, caractérisé en ce qu'on durcit le film humide entre 140 et 160°C.

7. Application des revêtements thermodurcissables selon l'une des revendications 1 à 4, pour le recouvrement de feuilles de finissage et de bords sans fin.
